# FASCICULE DE BREVET EUROPEEN

(11) **EP 0 390 617 B1**
(45) Date de publication et mention de la délivrance du brevet: **28.07.1993**
(21) Numéro de dépôt: 90400273.0
(22) Date de dépôt: 02.02.1990
(51) Int. Cl.: G01L 1/24

(54) **Capteur optique de pression ainsi que procédé pour la réalisation d'un tel capteur**
Optischer Druckwandler und dazugehöriges Verfahren zur Realisierung eines solchen Wandlers
Optical pressure sensor and procedure for realising such a sensor

(30) Priorité: 02.02.1989 FR 8901361
(43) Date de publication de la demande: 03.10.1990
(73) Titulaire: SCHLUMBERGER INDUSTRIES, F-92120 Montrouge (FR)
(72) Inventeur: Grasdepot, François, F-75014 Paris (FR)
(74) Mandataire: Dupont, Henri

(56) Documents cités:
- OPTICS LETTERS, vol. 11, no. 5, mai 1986, pages 333-335, Optical Society of America; H.M. XIE et al.: "Side-hole fiber for fiber-optic pressure sensing"

## Description

La présente invention concerne un capteur optique de pression, sous la forme d'un corps cylindrique en matériau transparent (tel que du verre) à propriétés photoélastiques, pourvu d'au moins un, et de préférence deux conduits creux internes, parallèles à l'axe longitudinal du corps, ainsi qu'un procédé de réalisation d'un tel capteur. Le corps soumis à une pression donnée, subit des contraintes anisotropes qui engendrent un effet de biréfringence par photo-élasticité; la biréfringence d'un rayon lumineux incident (traversant longitudinalement le corps) croit avec la pression.

On connait, par l'article paru dans la revue périodique Optics letters, volume 11 n° 5, de mai 1986, sous le titre "Side-hole fiber for fiber-optic pressure sensing", par M.H. Xie, Ph. Dabkiewicz, R. Ulrich et K. Okamoto, un capteur appliqué à la mesure de la pression, et constitué d'une fibre optique de verre, pourvue de conduits internes longitudinaux ; on mesure la variation de biréfringence d'un rayon lumineux incident qui croît avec la pression Pi régnant à l'intérieur des conduits; en variante, une pression constante est maintenue à l'intérieur des conduits tandis que la pression à mesurer est appliquée à l'extérieur de la fibre.

Un tel capteur connu est sensible à la température, du fait que la fibre présente une différence de coefficients de dilatation thermique entre ses deux parties constitutives : le coeur (partie centrale) et la gaine optique (partie périphérique).

De plus, ce capteur connu n'est sensible qu'à la pression relative.

En outre, le fait que les polariseurs disposés à chaque extrémité de la fibre optique, ne sont pas soumis à la pression, entraîne des perturbations métrologiques.

Toutes ces difficultés diminuent l'intérêt et les domaines d'utilisation possibles d'un tel capteur.

Il a également été déjà décrit, par exemple par la publication du brevet allemand n° 34 05 026, un capteur de pression, notamment pour la mesure de pression différentielle, dans lequel un corps cylindrique transparent à la lumière est sensible à la pression d'un fluide, liquide ou gazeux, admis dans des cavités longitudinales percées à l'intérieur dudit corps. Ces cavités sont fermées aux deux extrémités du cylindre par des plaques d'étanchéité rapportées et maintenues soit par collage, soit dans le cas de plaques métalliques, par des boulons de serrage métalliques. Dans ces dernières sont montés des joints d'étanchéité qui viennent s'appliquer autour des ouvertures par lesquelles ces cavités débouchent dans les faces d'extrémité du corps cylindrique.

Comme le dispositif à fibres optiques évoqué précédemment, ce capteur n'est sensible qu'à la pression relative. En outre, la jonction des plaques d'étanchéité avec le corps du capteur est le siège de dilatations thermiques différentielles génératrices de contraintes parasites dans le corps du capteur. Cette jonction provoque également un défaut de stabilité à long terme.

L'invention propose un capteur optique de pression absolue, susceptible d'atténuer sensiblement, voire totalement, les effets indésirables et inconvénients cités précédemment.

A cette fin, selon l'invention telle que définie dans les revendications, le capteur de pression absolue, pourvu d'au moins un conduit interne longitudinal, est constitué d'un corps cylindrique, de longueur donnée (dans la direction longitudinale), en un matériau à propriétés photoélastiques, et le conduit dans lequel règne une pression sensiblement nulle est fermé ou scellé à ses extrémités sans apport de matériau extérieur; ceci peut être notamment réalisé pour l'une des extrémités du conduit par fusion des parois d'extrémités. Le capteur possède à ses extrémités deux faces polies.

Ainsi, le capteur selon l'invention d'une part permet la mesure de pression absolue, et d'autre part est quasiment insensible à la température compte tenu de son homogénéité structurelle ; de plus, il est possible de disposer le capteur selon l'invention et les deux polariseurs d'entrée et de sortie dans l'enceinte où règne la pression à mesurer.

Par ailleurs, si le procédé de réalisation d'un capteur de pression différentielle ou relative ne soulève pas de difficulté de réalisation majeure, dans la mesure où dans les conduits règne une pression de valeur connue (ou déterminable), il n'en est pas de même pour la réalisation d'un capteur de pression absolue, nécessitant de faire le vide à l'intérieur des conduits.

Un premier problème de fabrication consiste à obtenir un capteur homogène présentant des caractéristiques photo-élastiques indépendantes du procédé de fabrication, tandis qu'un second problème consiste à fermer hermétiquement les extrémités de chaque conduit tout en effectuant le vide à l'intérieur de ces derniers.

L'invention propose également un procédé pour la réalisation d'un capteur de pression absolue, apte à résoudre les deux problèmes visés ci-dessus.

A cette fin, selon l'invention, le procédé de réalisation d'un capteur optique de pression absolue, à partir d'un corps cylindrique en matériau transparent à un faisceau lumineux de sonde et à propriétés photoélastiques, pourvu d'au moins un conduit interne d'axe longitudinal débouchant aux deux extrémités respectives dudit corps, comprend les étapes suivantes :
1) on obture par scellement thermique et sans apport de matière la première extrémité du (ou des) conduit(s);
2) on relie la seconde extrémité du corps à des moyens aptes à réaliser le vide dans le(s) conduit(s) ;
3) on applique extérieurement en une zone du corps où le (ou les) conduit(s) doi(ven)t être obturé(s), une quantité de chaleur suffisante pour faire fondre le matériau au niveau de ladite zone;
4) on laisse refroidir;
5) on coupe le corps suivant une section droite située dans la partie bouchée du (ou des) conduit(s), et correspondant à la seconde extrémité du corps de capteur que l'on désire obtenir.
6) on polit la face correspondante à ladite section droite et la face opposée.

Lors de l'étape 3, la chaleur fait fondre le verre notamment au niveau de la paroi interne du (ou des) conduit(s), qui, sous l'effet de la pression différentielle due au vide, s'effondre et bouche le(s)dit(s) conduit(s).

On obtient ainsi, de manière peu onéreuse et rapide, un capteur optique de pression très fiable et résistant ; en effet, les extrémités ne comportent pas de colle - dont la résistance à la chaleur est limitée - et sont homogènes avec le reste du corps.

Pour une température donnée de la source de chaleur, la longueur de la partie "effondrée", et donc de la longueur des conduits, est fonction du temps d'application de la chaleur.

Lors de l'étape 1, l'obturation des premières extrémités respectives des conduits est réalisée avantageusement par scellement thermique.

L'invention sera bien comprise à la lumière de la description qui suit en référence au dessin annexé dans lequel :
- les figures 1A et 1B sont des vues respectivement en coupe transversale et longitudinale d'un capteur selon l'invention ; et
- la figure 2 montre schématiquement en coupe un dispositif pour la mise en oeuvre du procédé selon l'invention.

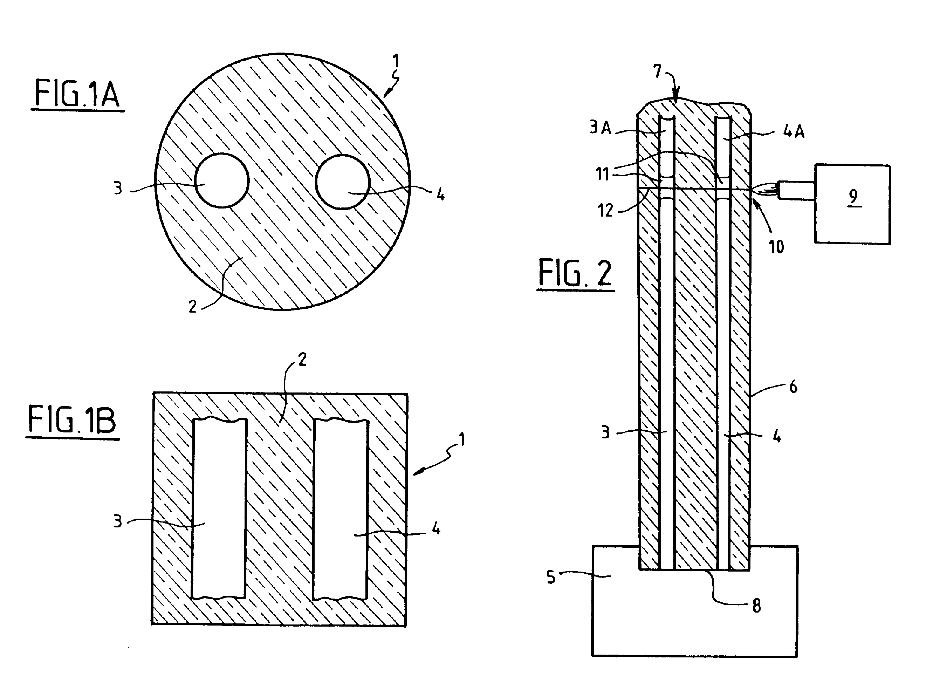

Le capteur 1, montré en coupe respectivement transversale et longitudinale sur les figures 1A et 1B, est constitué d'un corps cylindrique à base circulaire 2 en verre (ou tout autre matériau transparent présentant des propriétés de photo-élasticité), d'une longueur par exemple de dix mm et d'un diamètre de par exemple douze mm. Deux conduits internes cylindriques parallèles 3 et 4 parallèles à l'axe longitudinal du corps 2 et symétrique par rapport à celui-ci, sont prévus à l'intérieur du corps 2, à l'intérieur desquels règne le vide.

Le dispositif de la figure 2 montre un exemple de dispositif pour la mise en oeuvre du procédé selon l'invention, apte à réaliser le vide dans les conduits internes 3 et 4.

Les premières extrémités des conduits 3 et 4 sont obturées par scellement de la première extrémité 7 du corps 6, par exemple et de préférence par fusion avec application de chaleur.

Des moyens pour réaliser le vide, tels qu'une pompe à vide 5, à l'intérieur des conduits 3 et 4 internes d'un corps cylindrique 2 en verre, sont reliés à la seconde extrémité 8 du corps 2, de manière que les secondes extrémités ouvertes des conduits 3 et 4 communiquent avec ladite pompe 5.

Afin de réaliser un capteur formé d'un segment de corps cylindrique de longueur donnée (dans le sens longitudinal), on chauffe extérieurement et localement, par des moyens de chauffage connus en soi, le corps 6 en une zone 10 de ce dernier située à une distance de la première extrémité 7 scellée, correspondant à la longueur souhaitée du segment de corps destiné à constituer le capteur de pression.

Le matériau constituant le corps se ramollit par fusion dans la zone 10 notamment au niveau des parois internes des conduits 3 et 4, qui, sous l'effet du vide régnant dans ces derniers, "s'effondrent" et se joignent pour obturer lesdits conduits par scellements 11. Le vide règne à l'intérieur des segments de conduits obturés 3A et 4A.

On laisse refroidir, puis on coupe le corps selon une section droite 12 disposée sensiblement au niveau médian de la zone 10 chauffée et effondrée des conduits.

Les deux faces transversales constituant les extrémités du segment de corps sont ensuite polies.

La longueur (selon la direction longitudinale) des parties effondrées, qui conditionne la longueur totale des conduits, est fonction, pour un matériau et des dimensions de corps données, de la quantité de chaleur apportée au corps au niveau de la zone 10 "d'obturation".

A titre d'exemple, pour un segment de corps en matériau vendu sous la marque PYREX, d'une longueur d'un mêtre, d'un diamètre de 12 mm, pourvu de conduits de 3 mm de diamètre, une flamme de 650°C est appliquée pendant 30 s pour obtenir une zone 10 "d'obturation" de 5 mm de longueur.

## Revendications

1. Capteur optique de pression absolue pour un détecteur optique de pression du type comprenant des moyens pour délivrer un faisceau lumineux de sonde, un capteur optique de pression et deux polariseurs croisés disposés de part et d'autre du capteur, lequel capteur optique comprend un corps (2) transparent au faisceau lumineux de sonde, en un matériau à propriétés photoélastiques et possédant à ses extrémités deux faces polies pour l'entrée et la sortie du faisceau lumineux de sonde, ce corps (2) comportant en outre au moins un conduit interne (3,4) parallèle à la direction longitudinale dudit corps (2), une pression sensiblement nulle régnant dans le (s) conduit (s) dont les extrémités sont fermées de manière étanche sans apport de matériau extérieur

2. Capteur selon la revendication 1, caractérisé en ce qu'il est de forme cylindrique à base circulaire et comprend deux conduits (3,4) internes parallèles.

3. Procédé de réalisation d'un capteur optique de pression absolue conforme à l'une des revendications 1 ou 2, à partir d'un corps cylindrique (2) en un matériau transparent à un faisceau lumineux de sonde et à propriétés photoélastiques, ce corps (2) étant pourvu d'au moins un conduit interne (3,4) d'axe longitudinal débouchant aux, deux extrémités (7,8) respectives du corps, lequel procédé comprend les étapes suivantes:
1) on obture par scellement thermique et sans apport de matière une première extrémité (7) dudit corps (2);
2) on relie la seconde extrémité dudit corps à des moyens aptes à réaliser le vide dans chaque conduit;
3) on applique extérieurement en une zone (10) du corps où chaque conduit (3,4) doit être obturé, une quantité de chaleur suffisante pour faire fondre le matériau au niveau de ladite zone (10);
4) on laisse refroidir;
5) on coupe le corps suivant une section droite (12) située dans la partie bouchée de chaque conduit (3, 4) et correspondant à la seconde extrémité du corps de capteur que l'on désire obtenir;
6) on polit la face correspondante à ladite section droite et la face opposée.

## Patentansprüche

1. Optischer Fühler für den absoluten Druck für einen optischen Druckdetektor der der Art mit Mitteln zur Abgabe eines Sondenlichtbündels, einem optischen Druckfühler und zwei gekreuzten Polarisatoren, die beiderseits des Fühlers angeordnet sind, wobei der optische Fühler einen Körper (2) enthält, der für das Sondenlichtbündel durchlässig ist, aus einem Material mit photoelastischen Eigenschaften besteht und an seinen beiden Enden zwei polierte Flächen für den Eintritt und den Austritt des Sondenlichtbündels aufweist, wobei dieser Körper (2) überdies wengistens einen inneren Kanal (3, 4) aufweist, der parallel zu der Längsrichtung des Körpers (2) ist, und wobei im wesentlichen ein Druck Null in dem (den) Kanal (Kanälen) herrscht, dessen bzw. deren Enden ohne zusätzliches Material dicht verschlossen sind.

2. Fühler nach Anspruch 1, dadurch gekennzeichnet, daß er eine zylindrische Form mit kreisförmiger Basis besitzt und zwei innere, parallele Kanäle (3, 4) enthält.

3. Verfahren zur Verwirklichung eines optischen Fühlers für den absoluten Druck nach einem der Ansprüche 1 oder 2 ausgehend von einem zylindrischen Körper (2) aus einem Material, das für ein Sondenlichtbündel durchlässig ist und photoelastische Eigenschaften besitzt, wobei dieser Körper mit wenigstens einem inneren Kanal (3, 4) mit längsgerichteter Achse versehen ist, der an den betreffenden Enden (7, 8) des Körpers mündet, wobei dieses Verfahren die folgenden Schritte enthält:
1) man verschließt durch Heißsiegeln und ohne zusätzliches Material ein erstes Ende (7) des Körpers (2),
2) man verbindet das zweite Ende des Körpers mit Mitteln, die geeignet sind, den Hohlraum in jedem Kanal zu verwirklichen,
3) man bringt außen in einem Bereich (10) des Körpers, wo jeder Kanal (3, 4) verschlossen sein muß, eine Wärmemenge auf, die ausreicht, das Material auf dem Niveau des Bereichs (10) zum Schmelzen zu bringen.
4) man läßt abkühlen,
5) man schneidet den Körper gemäß einem Querschnitt (12), der in dem Teil eines jeweiligen Kanals (3, 4) angeordnet ist, der versperrt ist und dem zweiten Ende des Fühlerkörpers entspricht, das man erhalten will,
und
6) man poliert die entsprechende Fläche an dem Querschnitt und die gegenüberliegende Fläche.

## Claims

1. An optical absolute pressure sensor for an optical pressure detector of the kind comprises means to deliver an interrogating beam of light, an optical pressure sensor and two crossed polarizers disposed at either end of the sensors, the optical sensor comprising a body (2) transparent to the probing beam made of a substance having photoelastic properties and possessing at each end two polished faces for the entrance and exit of the interrogating beam of light, this body (2) further comprising at least one internal duct (3,4) parallel to the longitudinal direction of said body (2), the pressure ducts being substantially zero in the ducts whose ends are closed in a sealed manner without addition of external material.

2. A sensor according to claim 1, characterised in that the sensor is in the form of a circular cylinder including two parallel internal ducts (3, 4).

3. A method of making an optical absolute pressure sensor according to claim 1 or 2 from a cylindrical body (2) made of a material transparent to an interrogating beam of light and having photoelastic properties, the body(2) being provided with at least one internal duct (3,4) having a longitudinal axis and opening out at two respective ends of the body, the method comprising the following steps:
1) the duct is closed by thermal sealing and without addition of external material at a first end (7) of said body (2);
2) a second end of said body is connected to means suitable for establishing a vacuum in each duct;
3) heat is applied externally to a zone (10) of the body where each one of the ducts (3, 4) is to be closed, the quantity of heat applied being sufficient to melt the material in the region of said zone (10);
4) the body is allowed to cool; and
5) the body is cut on a cross section (12) running through the closed portions of each duct and corresponding to the second end of the body of the sensor which is to be obtained;
6) the face corresponding to said cross section and the face opposite said cross section is polished.
